(19)

Europäisches Patentamt
European Patent Office
Office européen des brevets

(11)  **EP 1 750 409 B1**

(12)  **EUROPEAN PATENT SPECIFICATION**

(45) Date of publication and mention
of the grant of the patent:
**18.05.2011  Bulletin 2011/20**

(51) Int Cl.:
*H04L 27/26* (2006.01)  *H04L 5/02* (2006.01)

(21) Application number: **06016028.0**

(22) Date of filing: **01.08.2006**

(54) **Apparatus and method for receiving signals of adjacent frequency allocations in cellular environments**

Verfahren und Vorrichtung zum Empfang von Nachbarfrequenzsignalen in einem zellularen System

Procédé et dispositif de réception de signaux de fréquences adjacentes dans un système cellulaire

(84) Designated Contracting States:
**DE FR GB IT SE**

(30) Priority:  **01.08.2005  KR 20050070125**

(43) Date of publication of application:
**07.02.2007  Bulletin 2007/06**

(73) Proprietor: **Samsung Electronics Co., Ltd.**
**Yeongtong-gu**
**Suwon-si, Gyeonggi-do (KR)**

(72) Inventors:
• **Han, Ki-Young**
**Giheung-gu**
**Yongin-si**
**Gyeonggi-do (KR)**
• **Kwon, Young-Hoon**
**Geumgok,**
**Bundang-gu**
**Seongnam-si**
**Gyeonggi (KR)**
• **Hwang, Sung-Soo**
**Suwon-si**
**Gyeonggi-do (KR)**
• **Yoon, Soon-Yoon**
**Songpa-gu**
**Seoul (KR)**
• **Kim, Yong-Seok**
**Paldal-gu**
**Suwon-si**
**Gyeonggi-do (KR)**

• **Choi, Eun-Sun**
**Gwacheon-si**
**Gyeonggi-do (KR)**
• **Choi, Soong-Yoon**
**Yeongtong-gu**
**Suwon-si**
**Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A2- 1 509 056**

• **SEUNG-JONG PARK ET AL: "Frequency coordination between adjacent carriers of two CDMA operators" VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, vol. 3, 28 April 1996 (1996-04-28), pages 1458-1461, XP010162634 ISBN: 0-7803-3157-5**
• **SUNGHYUN CHOI ET AL: "A Unified Wireless LAN Architecture for Real-Time and Non-Real-Time Communication Services" IEEE / ACM TRANSACTIONS ON NETWORKING, IEEE / ACM, NEW YORK, NY, US, vol. 8, no. 1, February 2000 (2000-02), XP011038837 ISSN: 1063-6692**

EP 1 750 409 B1

## Description

The present invention relates generally to an apparatus and method for receiving data signals of two adjacent frequency allocations (FAs) in cellular environments, and in particular, to an apparatus and method for supporting a frame structure that enables a mobile station (MS) to simultaneously receive data signals from two base stations (BSs) with adjacent FAs in a cellular environment with a frequency reuse factor of N.

Cellular communication systems have been proposed to overcome the restrictions of a service area and a subscriber capacity. In the cellular communication system, the service area is divided into a plurality of sub-areas (i.e., cells). Two cells spaced apart from each other by a sufficient distance use the same FA such that frequency resources can be spatially reused. Accordingly, the cellular communication system can accommodate a sufficient number of subscribers by increasing the number of spatially-distributed channels.

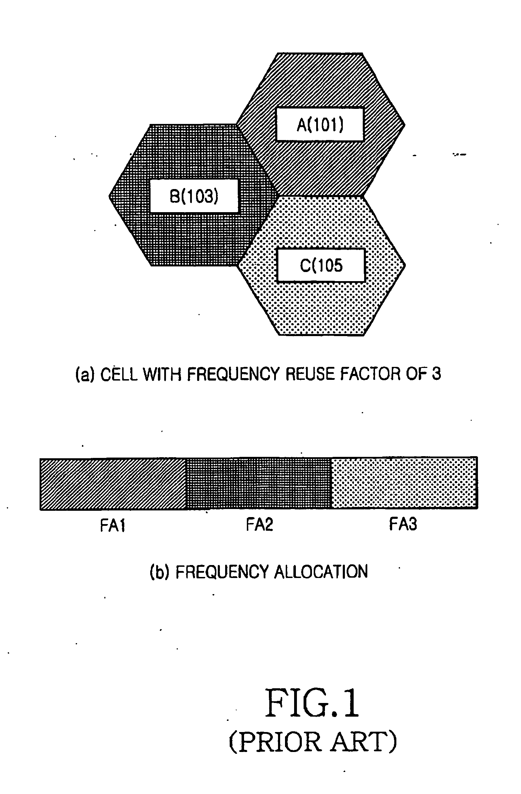

FIG. 1 is a schematic diagram illustrating a conventional cellular system with a frequency reuse factor of 3. FIG. 1(a) illustrates cells with a frequency reuse factor of 3, and FIG. 1(b) illustrates FAs used in the respective cells.

As illustrated in FIG. 1(a), cells A(101), B(103) and C(105) use different FAs (FA1, FA2 and FA3) illustrated in FIG. 1(b), respectively.

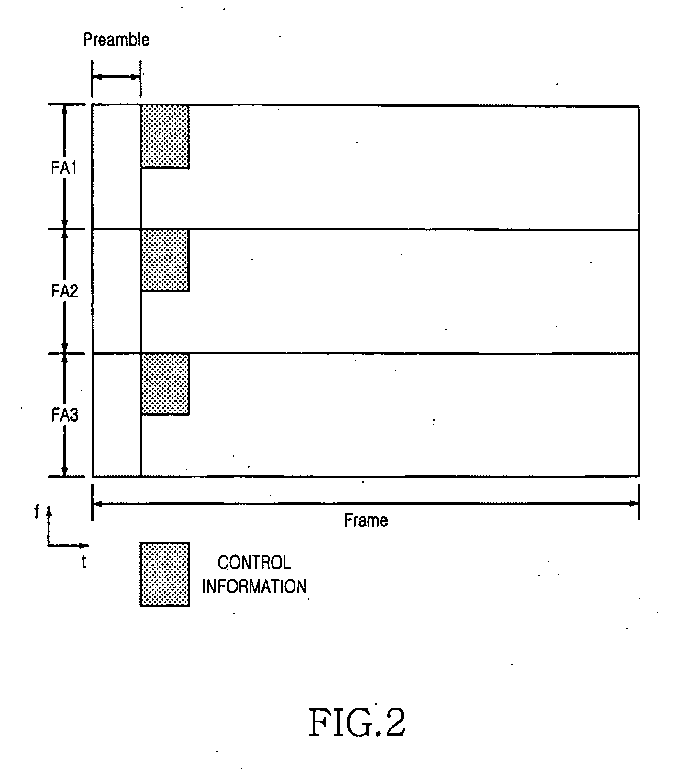

FIG. 2 is a diagram illustrating a frame structure of the Institute of Electrical and Electronics Engineers (IEEE) 802.16 d/e system. In the following description, frame structures of cells with a frequency reuse factor of 3 illustrated in FIG. 1 are taken as an example. In FIG. 2, the axis of ordinate is a subchannel that is a frequency resource unit, and the axis of abscissa is an orthogonal frequency division multiplexing (OFDM) symbol that is a time resource unit.

As illustrated in FIG. 2, the cells A (101), B(103) and C (105) use different FAs (FA1, FA2 and FA3), respectively. A frame used in each cell includes a preamble field, a control information field, and a data field.

The preamble field is used to provide time/frequency synchronization to subscribers and to acquire cell information. The control information field includes a frame control header (FCH), a downlink medium access protocol (DL-MAP), and an uplink MAP (UL-MAP). The FCH contains information for decoding the DL-MAP. A DL-Burst contains information data to be transmitted to a base station. The DL-MAP contains information about locations of DL-Bursts in a frame and information about which user DL-Burst data belongs to. The UL-MAP contains information which section in a frame a user's data can be loaded.

The data field is classified into a DL-Burst and an UL-Burst. The data field is a field where actual data are located. The data field includes at least one subchannel and at least one symbol.

The maximum allowable number of channels per unit area in the above cellular communication system can be increased by reducing a cell radius or by reducing a frequency reuse factor. The frequency reuse factor is parameter that indicates a frequency efficiency rating. That is, the frequency reuse factor indicates how many cells the entire frequency band is distributed to. When the frequency reuse factor decreases, the maximum allowable frequency band per cell increases but a signal-to-interference ratio (SNR) in a cell boundary region increases. On the contrary, when the frequency reuse factor increases, an SNR in a cell boundary region decreases but the maximum allowable frequency band per cell decreases. Accordingly, the frequency reuse factor is determined considering the maximum SNR required by a mobile station.

As described above, the number of channels per unit area can be increased using the frequency reuse factor. However, because two base stations adjacent to each other use different frequency bands, a mobile station cannot simultaneously receive data from the adjacent base stations.

Seung-Jong Park et al: "Frequency coordination between adjacent carriers of two CDMA operators" Vehicular Technology Conference, 1996. Mobile Technology for the Human Race., IEEE 46th Atlanta, GA, USA 28 April-1 May 1996, New York, NY, USA, IEEE, US, vol. 3, 28 April 1996, pages 1458-1461 discloses a frequency coordination process between adjacent carriers of two CDMA operators. The frequency coordination assigns frequency bands to neighboring or co-existing systems to minimize interference. In order to lessen the unwanted interference, a guard band is proposed which separates the adjacent carriers. When two CDMA operators make a service with adjacent carriers, CDMA customers subscribe to one carrier (server), but are not supported by an alternate carrier (competitor). It is assumed that base stations of two operators are not collocated. If the base stations are not collocated, the spatial near-far problem occurs. In order to endure competitor's interference, the CDMA receivers of the base station and the mobile station reject that interference by receiver's filter.

EP-A2-1 509 056 discloses a method for selecting a cell by a user equipment to receive an MBMS service in a mobile communication system that supports the MBMS service with different frequency allocations in the same area. A radio network controller transmits information on an MBMS cell to the user equipment and the MBMS cell information includes an MBMS offset for guaranteeing priority for cell reselection to the MBMS cell. The user equipment performs cell reselection using the MBMS cell information and receives the MBMS service from the reselected cell.

Therefore, it is the object of the present invention to provide an improved base station apparatus and a corresponding mobile station apparatus allowing a mobile station to receive data signals of two adjacent frequency allocations in a wireless communication system, as well as corresponding methods for transmitting and receiving the data.

This object is solved by the subject matter of the independent claims.

Preferred embodiments are defined by the dependent claims.

An aspect of the present invention is to substantially solve at least the above problems and/or disadvantages and to provide at least the advantages below. Accordingly, an aspect of the present invention is to provide an apparatus and method for simultaneously receiving data signals from BSs with adjacent FAs in a cellular environment.

Another aspect of the present invention is to provide an apparatus and method for supporting a frame structure capable of simultaneously receiving data signals from BSs with adjacent FAs in a cellular environment.

A further aspect of the present invention is to provide an apparatus and method for simultaneously receiving data signals from BSs with adjacent FAs in a cellular environment, thereby realizing a diversity gain.

According to an aspect of the present invention, a base station apparatus for a broadband wireless communication system with a frequency reuse factor of N includes a subcarrier mapper and an inverse fast Fourier transform (IFFT) processor. When there is another base station using an FA adjacent to an FA of the base station, the subcarrier mapper maps control information to subcarriers of predetermined sections such that a mobile station simultaneously receives data signals of the adjacent FAs. The IFFT processor IFFT-processes data mapped to the subcarriers.

According to another aspect of the present invention, a mobile station apparatus simultaneously receives data signals of two adjacent FAs in a broadband wireless communication system that has a frequency reuse factor of N. When signals are simultaneously received from two base stations using two adjacent FAs, a frequency controller selects a carrier for simultaneously receiving data signals of the two adjacent FAs. A local oscillator generates the carrier selected by the frequency controller. A multiplier multiplies the generated carrier from the local oscillator by a received signal to generate a baseband signal. An analog-to-digital (A/D) converter converts the baseband signal from the multiplier into a digital signal. A fast Fourier transform (FFT) processor FFT-processes the digital signal from the A/D converter. A subcarrier demapper receives an output signal from the FFT processor and extracts actual data from the output signal from the FFT processor by using control information mapped to a subcarrier of a predetermined section where the two FAs are adjacent to each other.

According to a further aspect of the present invention, there is provided a method for transmitting data from a base station in a broadband wireless communication system with a frequency reuse factor of N. In the method, it is determined whether there is another base station using an FA adjacent to an FA of the base station. When there is the another base station, a frame is created by locating control information such that a mobile station can simultaneously receive data of the two adjacent FAs. The created frame is transmitted to the mobile station.

According to still another aspect of the present invention, there is provided a method for receiving data of two adjacent FAs at a mobile station in a broadband wireless communication system that has a frequency reuse factor of N. When signals are simultaneously received from two base stations, it is determined whether FAs of the two base stations are adjacent to each other. When the FAs of the two base stations are adjacent to each other, the mobile station shifts its FA to simultaneously communicate with the two base stations.

## BRIEF DESCRIPTION OF THE DRAWINGS

The above and other objects, features, and advantages of the present invention will become more apparent from the following detailed description when taken in conjunction with the accompanying drawings in which:

FIG. 1 is a schematic diagram illustrating a conventional cellular system with a frequency reuse factor of 3;
FIG. 2 is a diagram illustrating a frame structure of the IEEE 802.16 d/e system;
FIG. 3 is a schematic diagram illustrating a scheme for simultaneously receiving data signals from two BSs with adjacent FAs, according to the present invention;
FIG. 4 is a schematic diagram illustrating a frame structure of three adjacent FAs, according to the present invention;
FIG. 5 is a schematic diagram illustrating a frame structure of four adjacent FAs, according to the present invention;
FIG 6 is a block diagram of a BS that enables an MS to simultaneously receive data signals of two adjacent FAs, according to the present invention;
FIG. 7 is a flowchart illustrating a procedure for transmitting data from a BS to an MS according to the present invention, which enables the MS to simultaneously receive data of two adjacent FAs;
FIG. 8 is a block diagram of an MS for simultaneously receiving data signals of two adjacent FAs, according to the present invention; and
FIG. 9 is a flowchart illustrating a procedure for simultaneously receiving data signals of two adjacent FAs, according to the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail because they would obscure the present invention in unnecessary detail.

The present invention provides an apparatus and method for simultaneously receiving data signals from two BSs with two adjacent FAs in a cellular environment with a frequency reuse factor of N. In the following description, the bandwidth that an MS transmitting a maximum amount of information occupies in the cellular environment is referred to as "FA bandwidth". Also, the MS and the BSs will be assumed to have the same bandwidth.

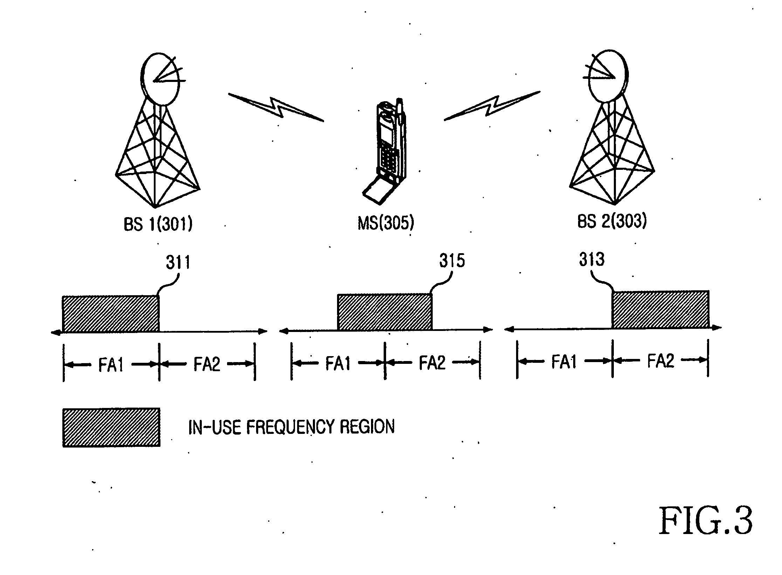

FIG. 3 is a schematic diagram illustrating a scheme for simultaneously receiving data signals from two BSs with adjacent FAs, according to the present invention.

Referring to FIG. 3, first and second BSs 301 and 303 adjacent to each other use different frequency allocations FA1 (311) and FA2 (313), respectively. The first and second FAs 311 and 313 are adjacent to each other. An MS 305 simultaneously receives data signals from the first and second BSs 301 and 303 by shifting its FA 315 such that the FA 315 includes both a portion of the first FA 311 and a portion of the second FA 313.

A demonstration will now be given to show that the MS 305 can selectively receive a desired signal using only the portions of the adjacent FAs 311 and 313. In the following description, an OFDM communication system is taken as an example.

Equation (1) below represents transmission (TX) signals $x_1(t)$ and $x_2(t)$ that are transmitted from the BSs 301 and 303 to the MS 305.

$$x_1(t) = \frac{1}{\sqrt{N}} \sum_{k=-\frac{N}{2}}^{\frac{N}{2}-1} X_1[k] \exp\left(j\frac{2\pi kt}{NT_s}\right) \exp(j2\pi f_{c1}t)$$

$$x_2(t) = \frac{1}{\sqrt{N}} \sum_{k=-\frac{N}{2}}^{\frac{N}{2}-1} X_2[k] \exp\left(j\frac{2\pi kt}{NT_s}\right) \exp(j2\pi f_{c2}t)$$

$$\ldots\ldots (1)$$

where $N$ is the size of the fast Fourier transform (FFT), $T_s$ is sampling time, $fc_1$ and $fc_2$ are carrier frequencies of the TX signals $x_1(t)$ and $x_2(t)$, and $X_1[k]$ and $X_2[k]$ are TX data transmitted from the BSs 301 and 303.

The TX signals $x_1(t)$ and $x_2(t)$ are received at a receiver of the MS 305 on a channel $h$. The received signals are down-converted into a baseband signal $y(t)$ of Equation (2):

$$y(t) = \left\{ \sum_{l=0}^{L-1} h_{1,l} x_1(t - \tau_l) + h_{2,l} x_2(t - \tau_l) \right\} \exp(-j2\pi f_{cm}t)$$

$$\ldots\ldots (2)$$

where $L$ is the number of multipaths generated during the transmission of the TX signals $x_1(t)$ and $x_2(t)$, $\tau_l$ is a delay of the $l$th path, $f_{cm}$ is a carrier frequency of the MS 305, and $h_1$ and $h_2$ are channels on which the TX signals $x_1(t)$ and $x_2(t)$ are received.

When the carrier frequency $f_{cm}$ is assumed to be the average of carrier frequencies of the BSs 301 and 303, the baseband signal $y(t)$ of Equation (2) can be simplified into a time-domain signal $y[n]$ of Equation (3) below by low-pass filtering and sampling at every sampling time $T_s$.

$$y[n] = \frac{1}{\sqrt{N}} [\sum_{l=0}^{L-1} \{h_{1,l} \sum_{k=0}^{\frac{N}{2}-1} X_1[k+\frac{N}{2}] exp(j\frac{2\pi(n-l)k}{N}) + h_{2,l} \sum_{k=\frac{N}{2}-1}^{-1} X_2[k] exp(j\frac{2\pi(n-l)(k+\frac{N}{2})}{N})\}]$$

$$\ldots \ldots (3)$$

where $N$ is the size of the FFT, $L$ is the number of multipaths generated during the transmission of the TX signals $x_1(t)$ and $x_2(t)$, and $h_1$ and $h_2$ are channels on which the TX signals $x_1(t)$ and $x_2(t)$ are received.

When data to be transmitted from the BSs 301 and 303 to the MS 305 are represented by $X[k]$, the time-domain signal $y[n]$ of Equation (3) can be expressed as a time-domain signal $y[n]$ of Equation (4):

$$y[n] = \frac{1}{\sqrt{N}} [\sum_{l=0}^{L-1} \{h_{1,l} \sum_{k=-\frac{N}{2}}^{-1} X[k] exp(j\frac{2\pi(n-l)k}{N}) + h_{2,l} \sum_{k=0}^{\frac{N}{2}-1} X[k] exp(j\frac{2\pi(n-l)k}{N})\}]$$

$$\ldots \ldots (4)$$

where $N$ is the size of the FFT, $L$ is the number of multipaths generated during the transmission of the TX signals $x_1(t)$ and $x_2(t)$, and $h_1$ and $h_2$ are channels on which the TX signals $x_1(t)$ and $x_2(t)$ are received.

Thereafter, when an FFT operation is performed on Equation (4), the time-domain signal $y[n]$ of Equation (4) can be expressed as a frequency-domain signal $Y[t]$ of Equation (5):

$$Y[t] = \begin{cases} X[k]\sum_{l=0}^{L-1} h_{1,l} exp(-j\frac{2\pi lk}{N}), & -\frac{N}{2} \leq k \leq -1 \\ X[k]\sum_{l=0}^{L-1} h_{2,l} exp(-j\frac{2\pi lk}{N}), & 0 \leq k \leq \frac{N}{2} - 1 \end{cases}$$

$$\ldots \ldots (5)$$

As can be seem from Equation (5), even though the MS 305 uses only the portions of the FAs 311 and 313 of the BSs 301 and 303, it can normally receive the data signals from the BSs 301 and 303.

However, in order to successfully communicate with the BSs 301 and 303, the MS 305 must be able to accurately detect a preamble and control information using the portions of the FAs 311 and 313. That is, the MS 305 must be able to perform functions such as cell identification (ID), synchronization, channel estimation, and frequency offset estimation using the preamble contained in the portions of the FAs 311 and 313. At this point, the preamble is generated by combining a pseudo noise (PN) sequence corresponding to a predetermined FA bandwidth with a scrambling code for discriminating between BSs.

Also, the location of data corresponding to the MS 305 must be accurately detected using the control information contained in the portions of the FAs 311 and 313.

What is therefore required is a frame structure for accurately receiving the preamble and the control information using only the portions of the FAs 311 and 313.

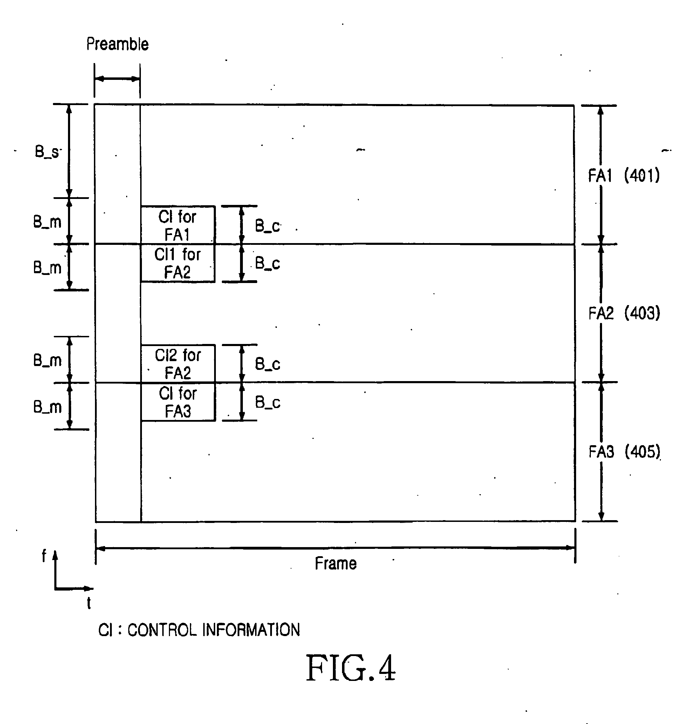

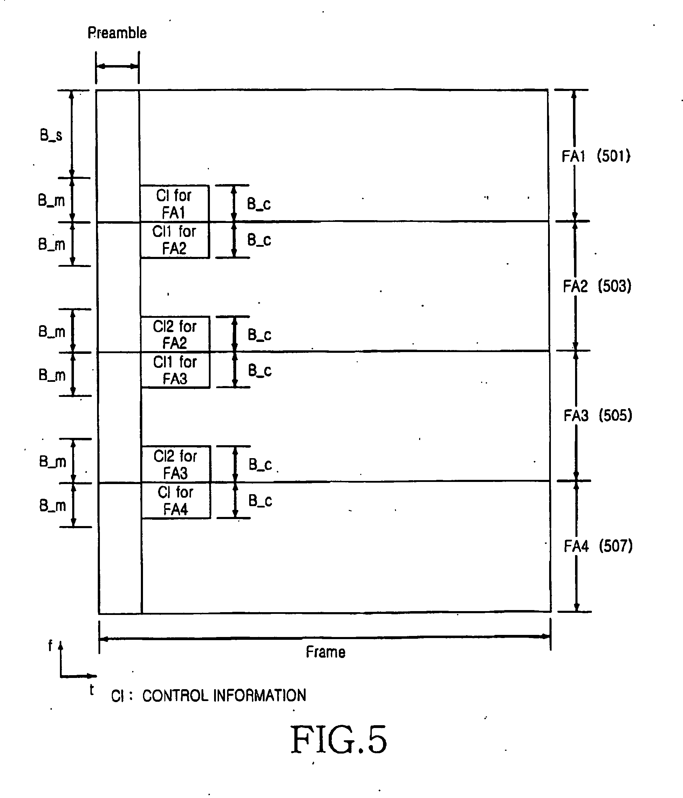

FIGs. 4 and 5 are schematic diagrams illustrating frame structures according to the present invention. FIG. 4 illustrates a method for locating the control information in a frame structure using three adjacent FAs, while FIG. 5 illustrates a method for locating the control information in a frame structure using four adjacent FAs. A bandwidth necessary for transmission of a maximum amount of control information will be referred to as "B_c". Also, a bandwidth necessary for the minimum scrambling code length for the primary function of the preamble will be referred to as "B_p". Also, the minimum bandwidth where the frequency band of the MS overlaps the frequency band of each of the FAs will be referred to as "B_m".

Referring to FIGs. 4 and 5, the control information is located in a section where the FAs are adjacent to each other such that the MS can simultaneously receive data over the adjacent FAs. For example, the control information is located between the first and second FAs 401 and 403 in FIG. 4, between the second and third FAs 403 and 405 in FIG. 4, between the first and second FAs 501 and 503 in FIG. 5, between the second and third FAs 503 and 505 in FIG. 5, and between the third and fourth FAs 505 and 507 in FIG. 5.

In particular, because each of the second FA 403, the second FA 503, and the third FA 505 have adjacent FAs at both sides, the control information is located at the both sides of each of the FAs 403, 503, and 505. At this point, the control information located at both sides of each of the FAs 403, 503 and 505 may be different in the both sides because different MSs may be located at both sides of each of the FAs 403, 503 and 505.

As illustrated in FIGs. 4 and 5, the adjacent FAs overlap each other at least by the minimum bandwidth B_m. At this point, the minimum bandwidth B_m must be larger than the maximum of the bandwidth B_c or B_p.

Assuming that the bandwidth of the FA is B, a band shift amount B_s for allowing the MS to simultaneously use the adjacent FAs is at least the FA bandwidth B and up to (B-B_m).

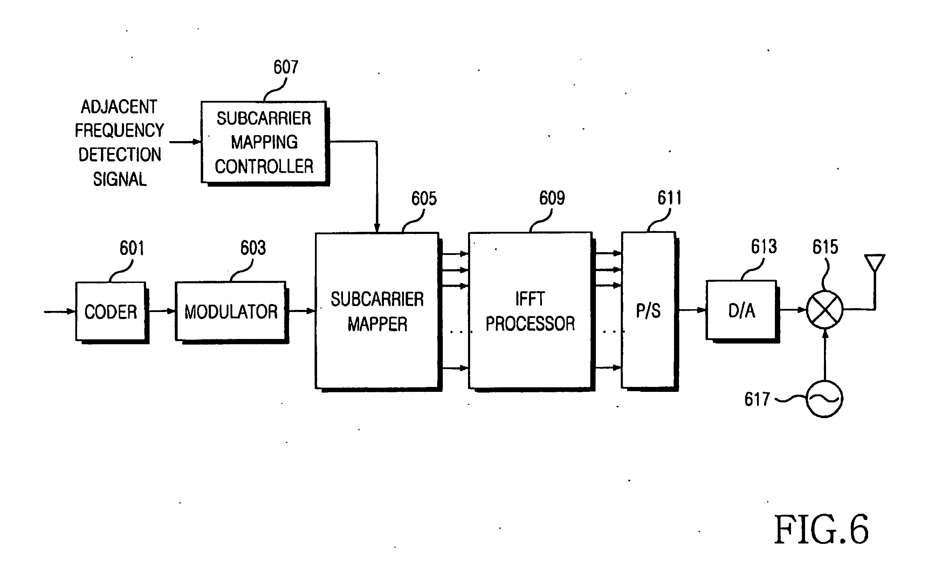

FIG. 6 is a block diagram of a BS that enables an MS to simultaneously receive data signals of two adjacent FAs, according to the present invention.

Referring to FIG. 6, the BS includes a coder 601, a modulator 603, a subcarrier mapper 605, a subcarrier mapping controller 607, an inverse FFT (IFFT) processor 609, a parallel-to-serial (P/S) converter 611, a digital-to-analog (D/A) converter 613, a multiplier 615, and a local oscillator 617.

The coder 601 performs channel-coding on input information data from a medium access control (MAC) layer at a predetermined coding rate to output the resulting data to the modulator 603. The modulator 603 modulates the data from the coder 601 by a predetermined modulation scheme to output the resulting data to the subcarrier mapper 605. Examples of the predetermined modulation scheme are the binary phase shift keying (BPSK) modulation scheme, the quadrature phase shift keying (QPSK) modulation scheme, the 16-QAM (quadrature amplitude modulation) scheme, and the 64-QAM scheme.

The subcarrier mapper 605 performs a subcarrier-mapping operation on the data from the modulator 603 under the control of the subcarrier mapping controller 607 to output the resulting data (i.e., frequency-domain data) to the IFFT processor 609. At this point, when there is another BS using an FA adjacent to an FA used by the BS, the subcarrier mapping controller 607 generates a control signal for mapping control information into a section where the FAs are adjacent to each other as illustrated in FIGs. 4 and 5.

The IFFT processor 609 IFFT-processes the frequency-domain data from the subcarrier mapper 605 to output time-sampled data (i.e., parallel data) to the P/S converter 611. The P/S converter 611 converts the parallel data from the IFFT processor 609 into serial data to output the resulting data (i.e., a digital signal) to the D/A converter 613. The D/A converter 613 converts the digital signal from the P/S converter into an analog signal to output an analog baseband signal to the multiplier 615. The multiplier 615 multiplies the analog baseband signal from the D/A converter 613 by an oscillating signal from the local oscillator 617 to generate a radio-frequency (RF) signal. The multiplier 615 and the local oscillator 617 constitute an RF processor. The RF signal is transmitted through an antenna.

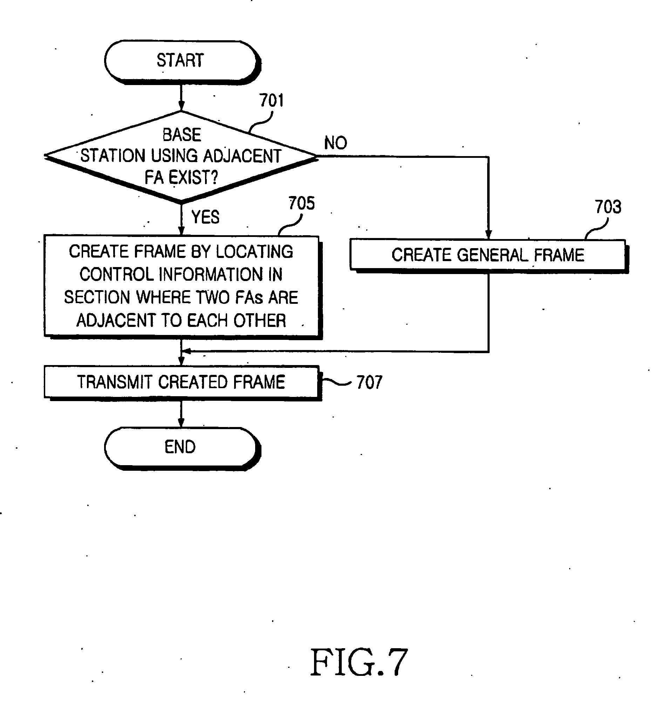

FIG. 7 is a flowchart illustrating a procedure for transmitting data from a BS to an MS according to the present invention, which enables the MS to simultaneously receive data of two adjacent FAs.

Referring to FIG. 7, in order to transmit data to an MS, the BS determines in step 701 if there is an adjacent BS using an FA adjacent to its FA. If so, the procedure proceeds to step 705, but if not, the procedure proceeds to step 703 and then to step 707. In step 703, the BS creates a general frame illustrated in FIG. 2 before transmitting the general frame in step 707.

In step 705, the BS maps control information into a section where the FA of the BS and the FA of the adjacent BS are adjacent to each other, as illustrated in FIGs. 4 and 5. Also, a preamble for discriminating the BS is repeatedly mapped throughout the entire FA of the BS to create a frame. The preamble includes a scrambling code for discriminating the BS.

In step 707, the BS transmits the created frame to the MS. Thereafter, the BS ends the procedure.

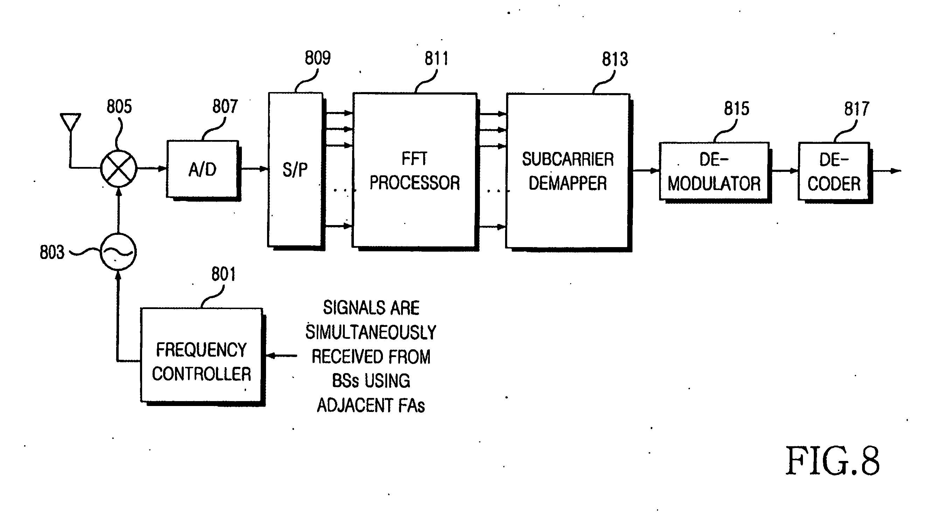

FIG. 8 is a block diagram of an MS for simultaneously receiving data signals of two adjacent FAs, according to the present invention.

Referring to FIG. 8, the MS includes a frequency controller 801, a local oscillator 803, a multiplier 805, an analog-to-digital (A/D) converter 807, a serial-to-parallel (S/P) converter 809, an FFT processor 811, a subcarrier demapper 813, a demodulator 815, and a decoder 817.

The frequency controller 801 generates a control signal for selecting an FA to be used by the MS. That is, because the MS uses a predetermined bandwidth, the frequency controller 801 generates a control signal for selecting a carrier that is a center frequency of the MS. Also, when simultaneously receiving signals from two BSs using two adjacent FAs, the frequency controller 801 generates a control signal for selecting a carrier for simultaneously receiving data from the two adjacent BSs. The local oscillator 803 generates the carrier (i.e., the center frequency of the BS) under the control of the frequency controller 801. At this point, the carrier is selected such that it includes a preamble of the minimum bandwidth for discriminating between the BSs and control information of each of the two adjacent FAs.

The multiplier 805 multiplies a signal received through an antenna by a carrier received from the local oscillator 803, thereby creating an FA for simultaneously receiving signals from the two base stations. The A/D converter 807 converts an output signal from the multiplier 805 into a digital signal. The digital signal is time-sampled data (i.e., serial data).

The S/P converter 809 coverts the serial data from the A/D converter 807 into parallel data. The FFT processor 811 FFT-processes the parallel data from the S/P converter 809 to output frequency-domain data.

The subcarrier demapper 813 extracts subcarrier values loaded with actual data from the output signal (i.e., subcarrier values) of the FFT processor 811. According to the present invention, the actual data of each FA is extracted using control information that is loaded into a subcarrier of a predetermined section where the two FAs are adjacent to each other.

The demodulator 815 demodulates the actual data from the subcarrier demapper 813 by a predetermined demodulation scheme. The decoder 817 performs a channel-decoding operation on the decoded data from the demodulator 815 at a predetermined coding rate, thereby restoring information data.

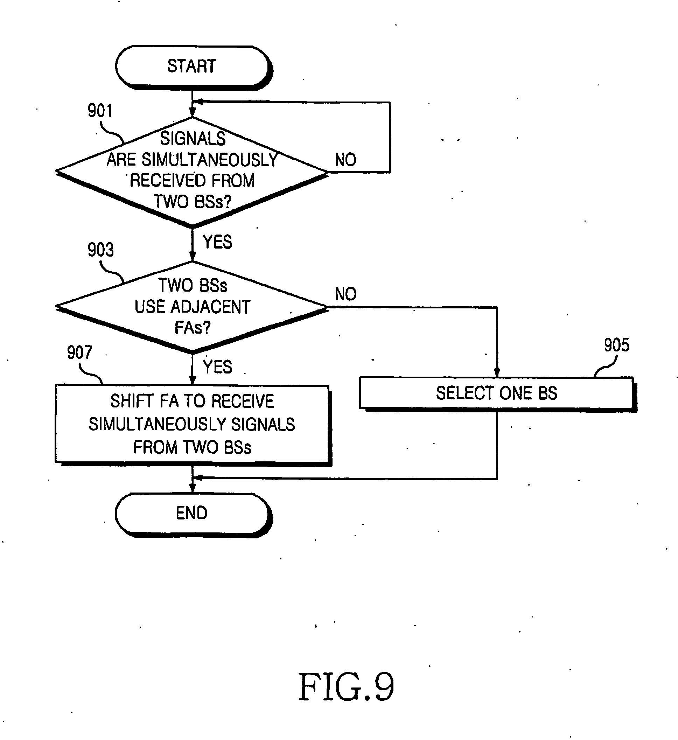

FIG. 9 is a flowchart illustrating a procedure for simultaneously receiving data signals of two adjacent FAs, according to the present invention.

Referring to FIG. 9, an MS determines in step 901 if it simultaneously receives signals from two BSs in step 901. If so, the MS proceeds to step 903, and if not, the BS performs step 901 again. In step 903, the MS determines if FAs used by the two BSs are adjacent to each other. If so, the MS proceeds to step 907, and if not, the MS proceeds to step 905. In step 905, the MS measures RX signal strengths (e.g., pilot strengths) of the two BSs to select the BS with a stronger RX signal, and receives data from the selected BS. Thereafter, the MS ends the procedure.

In step 907, the MS shifts an FA to simultaneously receive the data from the two BSs, as illustrated in FIG. 3. Thereafter, the MS ends the procedure.

As described above, the present invention provides a frame structure that makes it possible for an MS to receive both of data signals of two adjacent FAs in a cellular environment with a frequency reuse factor of N. The MS can simultaneously communicate with BSs that use the adjacent FAs. Because two different BSs transmit the same data through independent paths, the MS can obtain a macro diversity gain. In a case where a first BS is short in capacity while a second BS adjacent to the first BS is abundant in capacity, the MS simultaneously communicates with the first and second BSs such that the first BS transmits a small amount of data while the second BS transmits a large amount of data, thereby making it possible to balance the loads of the two BSs.

While the present invention has been shown and described with reference to certain preferred embodiments thereof, it will be understood by those skilled in the art that various changes in form and details may be made therein without departing from the scope of the present invention as defined by the appended claims.

**Claims**

1. A base station apparatus (301) for a wireless communication system with a frequency reuse factor of N, wherein the apparatus is adapted to determine if there is a neighbor base station (303) using a frequency allocation, FA, adjacent to an FA of the base station apparatus wherein said FAs have a shared boundary, said apparatus further comprising:

   a subcarrier mapper (605) for mapping, if there is a neighbor base station that uses a FA adjacent to an FA of the base station, control information to subcarriers of a section adjacent to the FA of the neighbor base station; and
   an inverse fast Fourier transform, IFFT, processor (609) for IFFT-processing data mapped to the subcarriers.

2. The base station apparatus (301) of claim 1, further comprising:

   a coder (601) for receiving information data from a medium access control, MAC, layer and coding the received information data at a predetermined coding rate; and
   a modulator (603) for modulating the coded data from the coder by a predetermined modulation scheme and providing the resulting data to the subcarrier mapper.

3. The base station apparatus (301) of claim 1, wherein the control information includes a preamble and channel allocation information.

4. The base station apparatus (301) of claim 3, wherein the preamble is repeatedly mapped throughout the entire FA of the base station.

**5.** The base station apparatus (301) of claim 3, wherein the channel allocation information is mapped to subcarriers of a section adjacent to the FA of the neighbor base station.

**6.** The base station apparatus (301) of claim 3, wherein when there are FAs adjacent respectively to both side sections of the FA, two pieces of the channel allocation information are mapped to subcarriers of the both side sections of the FA.

**7.** The base station apparatus (301) of claim 6, wherein the two pieces of the channel allocation information are one of identical to and different from each other depending on the mobile station using data allocated to the FA.

**8.** The base station apparatus (301) of claim 1, further comprising:

a digital-to-analog, D/A, converter (613) for converting an output signal of the IFFT processor (609) into an analog signal; and
a radio-frequency, RF, processor (615, 617) for converting a baseband analog signal from the D/A converter into an RF signal to output the resulting analog signal to the mobile station through an antenna.

**9.** A mobile station apparatus (305) adapted to simultaneously receive data signals from two base stations using two adjacent frequency allocations, FAs, wherein said FAs have a shared boundary, in a wireless communication system that has a frequency reuse factor of N, the apparatus comprising:

a frequency controller (801) for selecting, when the mobile station apparatus simultaneously receives signals from two base stations using two adjacent FAs, a center frequency for simultaneously receiving data signals of the two base stations (301, 303) using two adjacent FAs;
a local oscillator (803) for generating the center frequency selected by the frequency controller; and
a multiplier (805) for multiplying the generated center frequency from the local oscillator by a received signal to generate a baseband signal for simultaneously receiving data of the two adjacent FAs.

**10.** The mobile station apparatus (305) of claim 9, wherein the center frequency is selected such that the carrier includes a preamble of a minimum bandwidth for discriminating between the base stations and channel allocation information of each of the two adjacent FAs.

**11.** The mobile station apparatus (305) of claim 10, wherein the channel allocation information is included in at least one part which is close to a shared boundary of the FAs of the base stations (301, 303).

**12.** The mobile station apparatus (305) of claim 10, wherein when two FAs are adjacent respectively to both side sections of the FA, the channel allocation information is included in subcarriers of the both side sections of the FA.

**13.** The mobile station apparatus (305) of claim 10, wherein the preamble is disposed throughout the entire FA of the base station so as to discriminate the base station.

**14.** The mobile station apparatus (305) of claim 9, further comprising:

an analog-to-digital, A/D, converter (807) for converting the baseband signal from the multiplier (805) into a digital signal;
a fast Fourier transform, FFT, processor (811) for FFT-processing the digital signal from the A/D converter; and
a subcarrier demapper (813) for receiving an output signal from the FFT processor and extracting actual data from the output signal from the FFT processor by using control information mapped to a subcarrier of a predetermined section where the two FAs are adjacent to each other.

**15.** A method for transmitting data from a base station (301) in a wireless communication system with a frequency reuse factor of N, the method comprising the steps of:

determining (701) if there is a neighbor base station (303) using a frequency allocation, FA, adjacent to an FA of the base station wherein said FAs have a shared boundary,
if it is determined that a neighbor base station uses a FA adjacent to an FA of the base station, creating (702) a frame by locating control information of a section adjacent to the FA of the neighbor base station; and
transmitting (703) the created frame to the mobile station (305).

**16.** The method of claim 15, wherein the control information includes a preamble and channel allocation information.

**17.** The method of claim 16, wherein the preamble is repeatedly mapped throughout the entire FA of the base station (301).

**18.** The method of claim 16, wherein the channel allocation information is mapped to subcarriers of a section adjacent to the FA of the neighbor base station.

**19.** The method of claim 16, wherein when there are FAs adjacent respectively to both side sections of the FA, two pieces of the channel allocation information are mapped to subcarriers of the both side sections of the FA.

**20.** The method of claim 19, wherein the two pieces of the channel allocation information are one of identical to and different from each other depending on a mobile station using data allocated to the FA.

**21.** A method for receiving data of two adjacent frequency allocations, FAs, wherein said FAs have a shared boundary, at a mobile station (305) in a wireless communication system that has a frequency reuse factor of N, the method comprising the steps of:

when signals are simultaneously received from two base stations (301, 303), determining whether FAs of the two base stations are adjacent to each other; and
when the FAs of the two base stations are adjacent to each other, simultaneously communicating with the two base stations by shifting an in-use FA of the mobile station, wherein the shifting of the in-use FA of the mobile station (305) comprises:

selecting a center frequency for simultaneously receiving data of the two adjacent FAs; and
multiplying the selected center frequency by a received signal to move to an FA for simultaneously receiving data of the two adjacent FAs.

**22.** The method of claim 21, further comprising, when the FAs of the two base stations (301, 303) are not adjacent to each other:

measuring the strength of a received, RX, signal; and
selecting from the two base stations the base station whose detected RX signal strength is greater than that of the other base station.

**23.** The method of claim 21, wherein the carrier is selected such that the carrier includes a preamble of a minimum bandwidth for discriminating between the base stations and channel allocation information of each of the two adjacent FAs.

**24.** The method of claim 23, wherein the channel allocation information is included in at least one part which is close to a shared boundary of the FAs of the base stations (301, 303).

**25.** The method of claim 23, wherein when two FAs are adjacent respectively to both side sections of the FA, the channel allocation information is included in subcarriers of the both side sections of the FA.

**26.** The method of claim 23, wherein the preamble is disposed throughout the entire FA of the base station so as to discriminate the base station.

**Patentansprüche**

**1.** Basisstations-Vorrichtung (301) für ein Drahtlos-Kommunikationssystem mit einem Frequenzwiederverwendungs-Faktor N, wobei die Vorrichtung so eingerichtet ist, dass sie feststellt, ob eine benachbarte Basisstation (303) vorhanden ist, die eine Frequenzzuweisung verwendet, die an eine Frequenzzuweisung der Basisstations-Vorrichtung angrenzt, wobei die Frequenzzuweisungen eine gemeinsame Grenze haben und die Vorrichtung des Weiteren umfasst:

eine Hilfsträger-Zuordnungseinrichtung (605), mit der, wenn eine benachbarte Basisstation vorhanden ist, die eine Frequenzzuweisung verwendet, die an eine Frequenzzuweisung der Basisstation angrenzt, Steuer-Informationen Hilfsträgern eines Abschnitts zugeordnet werden, der an die Frequenzzuweisung der benachbarten Basisstation angrenzt; und
einen IFFT-Prozessor (inverse fast Fourier transform processor) (609) für IFFT-Verarbeitung den Hilfsträgern zugeordneter Daten.

2. Basisstations-Vorrichtung (301) nach Anspruch 1, die des Weiteren umfasst:

eine Codiereinrichtung (601) zum Empfangen von Informationsdaten von einer MAC-Schicht (medium access control layer) sowie zum Codieren der empfangenen Informationsdaten mit einer vorgegebenen Codierrate; und
eine Modulationseinrichtung (603) zum Modulieren der codierten Daten von der Codiereinrichtung mit einem vorgegebenen Modulationsschema sowie zum Bereitstellen der resultierenden Daten für die Hilfsträger-Zuordnungseinrichtung.

3. Basisstations-Vorrichtung (301) nach Anspruch 1, wobei die Steuer-Informationen eine Präambel und Kanalzuweisungs-Informationen enthalten.

4. Basisstations-Vorrichtung (301) nach Anspruch 3, wobei die Präambel über die gesamte Frequenzzuweisung der Basisstation wiederholt zugeordnet wird.

5. Basisstations-Vorrichtung (301) nach Anspruch 3, wobei die Kanalzuweisungs-Informationen Hilfsträgern eines Abschnitts zugeordnet werden, der an die Frequenzzuweisung der benachbarten Basisstation angrenzt.

6. Basisstations-Vorrichtung (301) nach Anspruch 3, wobei, wenn Frequenzzuweisungen vorhanden sind, die jeweils an beide Seitenabschnitte der Frequenzzuweisung angrenzen, zwei Elemente der Kanalzuweisungs-Informationen Hilfsträgern der beiden Seitenabschnitte der Frequenzzuweisung zugeordnet werden.

7. Basisstations-Vorrichtung (301) nach Anspruch 6, wobei die zwei Elemente der Kanalzuweisungs-Informationen in Abhängigkeit von der Mobilstation, die der Frequenzzuweisung zugewiesenen Daten verwendet, identisch sind oder sich voneinander unterscheiden.

8. Basisstations-Vorrichtung (301) nach Anspruch 1, die des Weiteren umfasst:

einen Digital-Analog-Wandler (613) zum Umwandeln eines Ausgangssignals des IFFT-Prozessors (609) in ein analoges Signal; und
einen HF-Prozessor (615, 617), mit dem ein analoges Basisbandsignal von dem Digital-Analog-Wandler in ein HF-Signal umgewandet wird, um das resultierende analoge Signal über eine Antenne an die Mobilstation auszugeben.

9. Mobilstations-Vorrichtung (305), die so eingerichtet ist, dass sie simultan Datensignale von zwei Basisstationen empfängt, die zwei aneinander grenzende Frequenzzuweisungen verwenden, wobei die Frequenzzuweisungen eine gemeinsame Grenze haben, in einem Drahtlos-Kommunikationssystem, das einen Frequenzwiederverwendungs-Faktor N hat, und die Vorrichtung umfasst:

eine Frequenz-Steuereinrichtung (803), mit der, wenn die Mobilstations-Vorrichtung gleichzeitig Signale von zwei Basisstationen empfängt, die zwei aneinander grenzende Frequenzzuweisungen verwenden, eine Mittenfrequenz zum gleichzeitigen Empfangen von Datensignalen der zwei Basisstationen (301, 303), die zwei aneinander grenzende Frequenzzuweisungen verwenden, ausgewählt wird;
einen Lokaloszillator (803) zum Erzeugen der durch die Frequenz-Steuereinrichtung ausgewählten Mittenfrequenz; und
eine Multiplziereinrichtung (805), mit der die erzeugte Mittenfrequenz von dem Lokaloszillator mit einem empfangenen Signal multipliziert wird, um ein Basisbandsignal zum gleichzeitigen Empfangen von Daten der zwei aneinander grenzenden Frequenzzuweisungen zu erzeugen.

10. Mobilstations-Vorrichtung (305) nach Anspruch 9, wobei die Mittenfrequenz so ausgewählt wird, dass der Träger eine Präambel einer minimalen Bandbreite zum Unterscheiden zwischen den Basisstationen sowie Kanalzuweisungs-Informationen jeder der zwei aneinander grenzenden Frequenzzuweisungen enthält.

**11.** Mobilstations-Vorrichtung (305) nach Anspruch 10, wobei die Kanalzuweisungs-Informationen in wenigstens einem Teil enthalten sind, der nahe an einer gemeinsamen Grenze der Frequenzzuweisungen der Basisstationen (301, 303) liegt.

**12.** Mobilstations-Vorrichtung (305) nach Anspruch 10, wobei, wenn die zwei Frequenzzuweisungen jeweils an beide Seitenabschnitte der Frequenzzuweisung angrenzen, die Kanalzuweisungs-Informationen in Hilfsträgern der beiden Seitenabschnitte der Frequenzzuweisung enthalten sind.

**13.** Mobilstations-Vorrichtung (305) nach Anspruch 10, wobei die Präambel über die gesamte Frequenzzuweisung der Basisstation angeordnet ist, um die Basisstation zu erkennen.

**14.** Mobilstations-Vorrichtung (305) nach Anspruch 9, die des Weiteren umfasst:

einen Analog-Digital-Wandler (807) zum Umwandeln des Basisbandsignals von der Multipliziereinrichtung (805) in ein digitales Signal;
einen FFT-Prozessor (fast Fourier transform processor) (811) für FFT-Verarbeitung des digitalen Signals von dem Analog-Digital-Wandler; und
eine Hilfsträger-Demapping-Einrichtung (813) zum Empfangen eines Ausgangssignals von dem FFT-Prozessor sowie zum Extrahieren konkreter Daten aus dem Ausgangssignal von dem FFT-Prozessor unter Verwendung von Steuer-Informationen, die einem Hilfsträger eines vorgegebenen Abschnitts zugeordnet sind, in dem die zwei Frequenzzuweisungen aneinander grenzen.

**15.** Verfahren zum Senden von Daten von einer Basisstation (301) in einem Drahtlos-Kommunikationssystem mit einem Frequenzwiederverwendungs-Faktor N, wobei das Verfahren die folgenden Schritte umfasst:

Feststellen (701), ob eine benachbarte Basisstation (303) vorhanden ist, die eine Frequenzzuweisung verwendet, die an eine Frequenzzuweisung der Basisstation angrenzt, wobei die Frequenzzuweisungen eine gemeinsame Grenze haben;
wenn festgestellt wird, dass eine benachbarte Basisstation eine Frequenzzuweisung verwendet, die an eine Frequenzzuweisung der Basisstation angrenzt, Schaffen (702) eines Rahmens durch Lokalisieren von Steuer-Informationen eines Abschnitts, der an die Frequenzzuweisung der benachbarten Basisstation angrenzt; und
Senden (703) des erzeugten Rahmens zu der Mobilstation (305).

**16.** Verfahren nach Anspruch 15, wobei die Steuer-Informationen eine Präambel und Kanalzuweisungs-Informationen enthalten.

**17.** Verfahren nach Anspruch 16, wobei die Präambel über die gesamte Frequenzzuweisung der Basisstation wiederholt zugeordnet wird.

**18.** Verfahren nach Anspruch 16, wobei die Kanalzuweisungs-Informationen Hilfsträgern eines Abschnitts zugeordnet werden, der an die Frequenzzuweisung der benachbarten Basisstation angrenzt.

**19.** Verfahren nach Anspruch 16, wobei, wenn Frequenzzuweisungen vorhanden sind, die jeweils an beide Seitenabschnitte der Frequenzzuweisung angrenzen, zwei Elemente der Kanalzuweisungs-Informationen Hilfsträgern der beiden Seitenabschnitte der Frequenzzuweisung zugeordnet werden.

**20.** Verfahren nach Anspruch 19, wobei die zwei Elemente der Kanalzuweisungs-Informationen in Abhängigkeit von der Mobilstation, die der Frequenzzuweisung zugewiesenen Daten verwendet, identisch sind oder sich voneinander unterscheiden.

**21.** Verfahren zum Empfangen von Daten zweier aneinander grenzender Frequenzzuweisungen, wobei die Frequenzzuweisungen eine gemeinsame Grenze haben, an einer Mobilstation (305) in einem Drahtlos-Kommunikationssystem, das einen Frequenzwiederverwendungsfaktor N hat, und das Verfahren die folgenden Schritte umfasst:

Feststellen, ob Frequenzzuweisungen der zwei Basisstationen aneinander grenzen, wenn Signale gleichzeitig von zwei Basisstationen (301, 303) empfangen werden; und
gleichzeitiges Kommunizieren mit den zwei Basisstationen durch Verschieben einer in Verwendung befindlichen Frequenzzuweisung der Mobilstation, wenn die Frequenzzuweisungen der zwei Basisstationen aneinander grenzen, und wobei Verschiebung der in Verwendung befindlichen Frequenzzuweisung der Mobilstation (305) umfasst:

Auswählen einer Mittenfrequenz zum gleichzeitigen Empfangen von Daten der zwei einander grenzenden Frequenzzuweisungen; und
Multiplizieren der ausgewählten Mittenfrequenz mit einem empfangenen Signal, um zu einer Frequenzzuweisung zum gleichzeitigen Empfangen von Daten der zwei einander grenzenden Frequenzzuweisungen überzugehen.

22. Verfahren nach Anspruch 21, das des Weiteren, wenn die Frequenzzuweisungen der zwei Basisstationen (301, 303) nicht aneinander grenzen, umfasst:

Messen der Stärke eines empfangenen Signals; und
Auswählen derjenigen Basisstation aus den zwei Basisstationen, deren erfasste Empfangssignalstärke größer ist als die der anderen Basisstation.

23. Verfahren nach Anspruch 21, wobei der Träger so ausgewählt wird, dass der Träger eine Präambel einer minimalen Bandbreite zum Unterscheiden zwischen den Basisstationen sowie Kanalzuweisungs-Informationen jeder der zwei aneinander grenzenden Frequenzzuweisungen enthält.

24. Verfahren nach Anspruch 23, wobei die Kanalzuweisungs-Informationen in wenigstens einem Teil enthalten sind, der nahe an einer gemeinsamen Grenze der Frequenzzuweisungen der Basisstationen (301, 303) liegt.

25. Verfahren nach Anspruch 23, wobei, wenn die zwei Frequenzzuweisungen jeweils an beide Seitenabschnitte der Frequenzzuweisung angrenzen, die Kanalzuweisungs-Informationen in Hilfsträgern der beiden Seitenabschnitte der Frequenzzuweisung enthalten sind.

26. Verfahren nach Anspruch 23, wobei die Präambel über die gesamte Frequenzzuweisung der Basisstation angeordnet ist, um die Basisstation zu erkennen.

**Revendications**

1. Station de base (301) pour un système de communication sans fil présentant un facteur de réutilisation de fréquence de N, dans laquelle la station est conçue pour déterminer s'il existe une station de base voisine (303) utilisant une allocation de fréquence, FA, contiguë à l'allocation de fréquence FA de la station de base, dans laquelle lesdites allocations de fréquences FA ont une limite partagée, ladite station comprenant en outre :

- un dispositif de mappage (605) de sous-porteuses destiné à mapper, s'il existe une station de base voisine qui utilise une allocation de fréquence FA contiguë à l'allocation de fréquence FA de la station de base, des informations de commande sur des sous-porteuses d'une section adjacente à l'allocation de fréquence FA de la station de base voisine ; et
- un processeur (609) de transformation inverse de Fourier rapide, IFFT, destiné à traiter par transformation IFFT les données mappées sur les sous-porteuses.

2. Station de base (301) selon la revendication 1, comprenant en outre :

- un codeur (601) destiné à recevoir des données d'informations provenant de la couche de commande d'accès au support, MAC, et à coder les données d'informations reçues à un débit de codage prédéterminé ; et
- un modulateur (603) destiné à moduler les données codées provenant du codeur par un procédé de modulation prédéfini et à fournir les données résultantes au mappeur de sous-porteuses.

3. Station de base (301) selon la revendication 1, dans laquelle les informations de commande incluent un préambule et des informations d'allocation de canal.

4. Station de base (301) selon la revendication 3, dans laquelle le préambule est mappé de façon répétée sur l'intégralité de l'allocation de fréquence FA de la station de base.

**5.** Station de base (301) selon la revendication 3, dans laquelle les informations d'allocation de canal sont mappées sur des sous-porteuses d'une section adjacente à l'allocation de fréquence FA de la station de base voisine.

**6.** Station de base (301) selon la revendication 3, dans laquelle, quand il existe des allocations de fréquences FA contiguës respectivement aux deux sections latérales de l'allocation de fréquence FA, deux éléments des informations d'allocation de canal sont mappés sur des sous-porteuses des deux sections latérales de l'allocation de fréquence FA.

**7.** Station de base (301) selon la revendication 6, dans laquelle les deux éléments d'informations d'allocation de canal sont soit identiques l'un à l'autre, soit différents l'un de l'autre en fonction de la station mobile utilisant des données allouées à l'allocation de fréquence FA.

**8.** Station de base (301) selon la revendication 1, comprenant en outre :

- un convertisseur numérique vers analogique, N/A, (613) destiné à convertir un signal de sortie du processeur de transformation IFFT (609) en un signal analogique ; et
- un processeur de hautes fréquences, HF, (615, 617) destiné à convertir le signal analogique en bande de base provenant du convertisseur N/A en un signal HF afin de fournir en sortie à la station mobile le signal analogique résultant par l'intermédiaire d'une antenne.

**9.** Station mobile (305) conçue pour recevoir simultanément des signaux de données provenant de deux stations de base utilisant deux allocations de fréquences, FA, contiguës dans un système de communication sans fil qui présente un facteur de réutilisation de fréquence de N, dans laquelle lesdites allocations de fréquences FA ont une limite partagée, la station comprenant :

- un contrôleur de fréquence (801) destiné à sélectionner une fréquence centrale, quand la station mobile reçoit simultanément des signaux provenant de deux stations de base utilisant deux allocations de fréquences FA contiguës, afin de recevoir simultanément des signaux de données des deux stations de base (301, 303) utilisant deux allocations de fréquences FA contiguës ;
- un oscillateur local (803) destiné à générer la fréquence centrale sélectionnée par le contrôleur de fréquence ; et
- un multiplieur (805) destiné à multiplier la fréquence centrale générée à partir de l'oscillateur local par un signal reçu, pour générer un signal en bande de base afin de recevoir simultanément des données des deux allocations de fréquences FA contiguës.

**10.** Station mobile (305) selon la revendication 9, dans laquelle la fréquence centrale est sélectionnée de telle sorte que la porteuse inclue un préambule d'une largeur de bande minimale afin d'effectuer une discrimination entre les stations de base et les informations d'allocation de canal de chacune des deux allocations de fréquences FA contiguës.

**11.** Station mobile (305) selon la revendication 10, dans laquelle les informations d'allocation de canal sont incluses dans au moins une partie qui est proche d'une limite partagée des allocations de fréquences FA des stations de base (301, 303).

**12.** Station mobile (305) selon la revendication 10, dans laquelle, lorsque deux allocations de fréquences FA sont contiguës respectivement aux deux sections latérales de l'allocation de fréquence FA, les informations d'allocation de canal sont incluses dans des sous-porteuses des deux sections latérales de l'allocation de fréquence FA.

**13.** Station mobile (305) selon la revendication 10, dans laquelle le préambule est disposé sur l'intégralité de l'allocation de fréquence FA de la station de base de façon à effectuer une discrimination de la station de base.

**14.** Station mobile (305) selon la revendication 9, comprenant en outre :

- un convertisseur analogique vers numérique, A/N, (807) destiné à convertir le signal en bande de base provenant du multiplieur (805) en un signal numérique ;
- un processeur (811) de transformation de Fourier rapide, FFT, destiné à traiter par transformation FFT le signal numérique provenant du convertisseur A/N ; et
- un dispositif de dé-mappage (813) de sous-porteuses destiné à recevoir un signal de sortie provenant du processeur de transformation FFT et à extraire des données réelles du signal de sortie provenant du processeur de transformation FFT en utilisant des informations de commande mappées sur la sous-porteuse d'une section prédéfinie lorsque les deux allocations de fréquences FA sont contiguës l'une à l'autre.

15. Procédé permettant d'émettre des données à partir d'une station de base (301) dans un système de communication sans fil présentant un facteur de réutilisation de fréquence de N, le procédé comprenant les étapes consistant à :

- déterminer (701) s'il existe une station de base voisine (303) utilisant une allocation de fréquence, FA, contiguë à l'allocation de fréquence FA de la station de base, dans laquelle lesdites allocations de fréquences FA ont une limite partagée ;
- créer (702) une trame, s'il est déterminé qu'une station de base voisine utilise une allocation de fréquence FA contiguë à l'allocation de fréquence FA de la station de base, en localisant des informations de commande d'une section adjacente à l'allocation de fréquence FA de la station de base voisine ; et
- émettre (703) la trame créée vers la station mobile (305).

16. Procédé selon la revendication 15, dans lequel les informations de commande incluent un préambule et des informations d'allocation de canal.

17. Procédé selon la revendication 16, dans lequel le préambule est mappé de façon répétée sur l'intégralité de l'allocation de fréquence FA de la station de base (301).

18. Procédé selon la revendication 16, dans lequel les informations d'allocation de canal sont mappées sur des sous-porteuses d'une section adjacente à l'allocation de fréquence FA de la station de base voisine.

19. Procédé selon la revendication 16, dans lequel, lorsqu'il existe des allocations de fréquences FA contiguës respectivement aux deux sections latérales de l'allocation de fréquence FA, deux éléments des informations d'allocation de canal sont mappés sur des sous-porteuses des deux sections latérales de l'allocation de fréquence FA.

20. Procédé selon la revendication 19, dans lequel les deux éléments des informations d'allocation de canal sont soit identiques l'un à l'autre, soit différents l'un de l'autre en fonction de la station mobile utilisant des données allouées à l'allocation de fréquence FA.

21. Procédé permettant de recevoir au niveau d'une station mobile (305) des données de deux allocations de fréquences, FA, contiguës, dans lequel lesdites allocations de fréquences FA ont une limite partagée, dans un système de communication sans fil qui présente un facteur de réutilisation de fréquence de N, le procédé comprenant les étapes consistant à :

- déterminer, quand des signaux sont reçus simultanément en provenance de deux stations de base (301, 303), si les allocations de fréquences FA des deux stations de base sont contiguës l'une à l'autre ; et
- lorsque les allocations de fréquences FA des deux stations de base sont contiguës l'une à l'autre, communiquer simultanément avec les deux stations de base en décalant l'allocation de fréquence FA en service de la station mobile, le décalage de l'allocation de fréquence FA en service de la station mobile (305) comprenant :

- sélectionner une fréquence centrale afin de recevoir simultanément des données des deux allocations de fréquences FA contiguës ; et
- multiplier la fréquence centrale sélectionnée par un signal reçu, afin d'effectuer un déplacement vers une allocation de fréquence FA pour recevoir simultanément des données des deux allocations de fréquences FA contiguës.

22. Procédé selon la revendication 21, consistant en outre, quand les allocations de fréquences FA des deux stations de base (301, 303) ne sont pas contiguës l'une à l'autre, à :

- mesurer l'intensité d'un signal, RX, reçu ; et
- sélectionner, à partir des deux stations de base, la station de base dont l'intensité détectée du signal RX est supérieure à celle de l'autre station de base.

23. Procédé selon la revendication 21, dans lequel la porteuse est sélectionnée de telle sorte que la porteuse inclue un préambule d'une largeur de bande minimale afin d'effectuer une discrimination entre les stations de base et les informations d'allocation de canal de chacune des deux allocations de fréquences FA contiguës.

**24.** Procédé selon la revendication 23, dans lequel les informations d'allocation de canal sont incluses dans au moins une partie qui est proche d'une limite partagée des allocations de fréquences FA des stations de base (301, 303).

**25.** Procédé selon la revendication 23, dans lequel, lorsque deux allocations de fréquences FA sont contiguës respectivement aux deux sections latérales de l'allocation de fréquence FA, les informations d'allocation de canal sont incluses dans des sous-porteuses des deux sections latérales de l'allocation de fréquence FA.

**26.** Procédé selon la revendication 23, dans lequel le préambule est disposé sur l'intégralité de l'allocation de fréquence FA de la station de base de façon à effectuer une discrimination de la station de base.

(a) CELL WITH FREQUENCY REUSE FACTOR OF 3

FA1          FA2          FA3

(b) FREQUENCY ALLOCATION

# FIG.1
## (PRIOR ART)

FIG.2

BS 1(301)                    MS(305)                    BS 2(303)

311                          315                        313

|← FA1 →|← FA2 →|          |← FA1 →|← FA2 →|          |← FA1 →|← FA2 →|

IN-USE FREQUENCY REGION

FIG.3

EP 1 750 409 B1

Preamble

CI : CONTROL INFORMATION

FIG.4

FIG.5

CI : CONTROL INFORMATION

EP 1 750 409 B1

ADJACENT
FREQUENCY
DETECTION
SIGNAL

607

SUBCARRIER
MAPPING
CONTROLLER

601

CODER

603

MODULATOR

605

SUBCARRIER
MAPPER

609

IFFT
PROCESSOR

611

P/S

613

D/A

615

617

FIG.6

START

701

BASE STATION USING ADJACENT FA EXIST?

NO

YES

705

CREATE FRAME BY LOCATING CONTROL INFORMATION IN SECTION WHERE TWO FAs ARE ADJACENT TO EACH OTHER

703

CREATE GENERAL FRAME

TRANSMIT CREATED FRAME — 707

END

FIG.7

FIG.8

EP 1 750 409 B1

START

901

SIGNALS
ARE SIMULTANEOUSLY
RECEIVED FROM
TWO BSs?

NO

YES

903

TWO BSs
USE ADJACENT
FAs?

NO

905

907

YES

SHIFT FA TO RECEIVE
SIMULTANEOUSLY SIGNALS
FROM TWO BSs

SELECT ONE BS

END

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1509056 A2

**Non-patent literature cited in the description**

- **Seung-Jong Park et al.** Frequency coordination between adjacent carriers of two CDMA operators. *Vehicular Technology Conference, 1996. Mobile Technology for the Human Race.,* 28 April 1996, vol. 3, 1458-1461